# EUROPÄISCHE PATENTSCHRIFT

(11) **EP 2 517 883 B1**
(45) Veröffentlichungstag und Bekanntmachung des Hinweises auf die Patenterteilung: **17.10.2018**
(21) Anmeldenummer: 12163672.4
(22) Anmeldetag: 11.04.2012
(51) Int. Cl.: B41F 33/16, B41F 33/12, B41F 33/00, G06F 3/12

(54) **Verfahren zum Betreiben einer Druckmaschine**
Method for operating a printing machine
Procédé destiné au fonctionnement d'une machine d'impression

(30) Priorität: 28.04.2011 DE 102011018858
(43) Veröffentlichungstag der Anmeldung: 31.10.2012
(73) Patentinhaber: Heidelberger Druckmaschinen AG, 69115 Heidelberg (DE)
(72) Erfinder: Ehrhardt, Stephan, 68809 Neulußheim (DE)

(56) Entgegenhaltungen:
- EP-A2- 1 155 850
- DE-A1- 10 339 571
- US-B2- 7 454 263

## Beschreibung

Die Erfindung betrifft ein Verfahren zum Betreiben einer Druckmaschine mit einem Steuerrechner, in dessen zugehörigem Speicher die Maschineneinstellungen für verschiedene Druckaufträge speicherbar sind.

Es ist bei Bogenoffsetdruckmaschinen bereits seit längerem bekannt, die zur Abarbeitung eines bestimmten Druckauftrags vom Drucker betätigten Einstellungen an der Maschine zu speichern und bei einem sogenannten Folgeauftrag, bei dem das gleiche Druckprodukt später nochmals gedruckt werden soll, wieder zu verwenden. Daneben sind jüngst auch Verfahren bekannt geworden, mit denen die Einstellung der Druckmaschine auch dann automatisiert vorgenommen werden können, wenn nicht der gleiche Folgeauftrag zu einem bereits gespeicherten Auftrag gedruckt werden soll. Für diesen Falle beschreibt die US 7,454,263 B2 ein Verfahren, bei dem mittels eines Softwareprogramms aus den Auftragsdaten des zu druckenden neuen Auftrags dessen Eigenschaften ermittelt und daraus Einstellvorgänge abgeleitet werden, die dem Bediener in einem Dialog als Vorschläge präsentiert werden und von ihm angenommen oder verändert bzw. ergänzt werden können.

Des Weiteren ist es aus der DE 10339571 A1 bekannt, die Daten eines neuen Druckauftrags mit denen des davor auf der Maschine abgearbeiteten Druckauftrags zu vergleichen und aufgrund des Vergleichs die Reihenfolge der bei dem anstehenden Auftragswechsel fällig werden Arbeiten so zu verändern bzw. zu optimieren, dass sich eine möglichst kurze Rüstzeit ergibt.

Aus der europäischen Patentanmeldung EP 1 155 850 A2 ist ein System und ein Verfahren zur Überwachung des Druckproduktions-Workflows bekannt. Das System umfasst Workflow-Management-Software, die die Verfahrensschritte des Workflows, nämlich den Auftragsbeginn, den Auftragseingang, die Auftragsbearbeitung, die Druckproduktion und die Auftragsvollendung überwacht und erleichtert. Die Workflow-Management- Software umfasst eine integrierte objektorientierte Schnittstelle, die den Workflow visuell darstellt und mittels derer in den Workflow eingegriffen werden kann.

Alle diese bekannten Ansätze dienen dazu, den Drucker im Bezug auf die komplexen Vorgänge beim Rüsten der Maschine für einen neuen Druckauftrag zu unterstützen. Diese bekannten Lösungen berücksichtigen jedoch nicht, dass es gelegentlich auch innerhalb ein und desselben Auftrags erforderlich sein kann, mehrere Druckdurchgänge durchzuführen d. h. den zu bedruckenden Bogen mehrmals hintereinander durch die gleiche Maschine durchlaufen zu lassen. Für einen derartigen zweiten, dritten oder mehrfachen Durchlauf musste der Drucker bisher die dafür erforderlichen Maschineneinstellungen anhand seiner Kenntnisse selbsttätig durchführen, was wiederum nicht selten zu Fehleinstellungen geführt wird. Denn je nach Art und Weise des zweiten oder mehrfachen Druckdurchgangs sind ganz unterschiedliche Einstellungen an der Maschine zu ändern oder zu belassen.

Es ist deshalb die Aufgabe der vorliegenden Erfindung, ein Verfahren anzugeben, mit dem die Einstellungen der Druckmaschine innerhalb des gleichen Druckauftrags bei mehrfachen Druckdurchgängen vereinfacht und erleichtert werden.

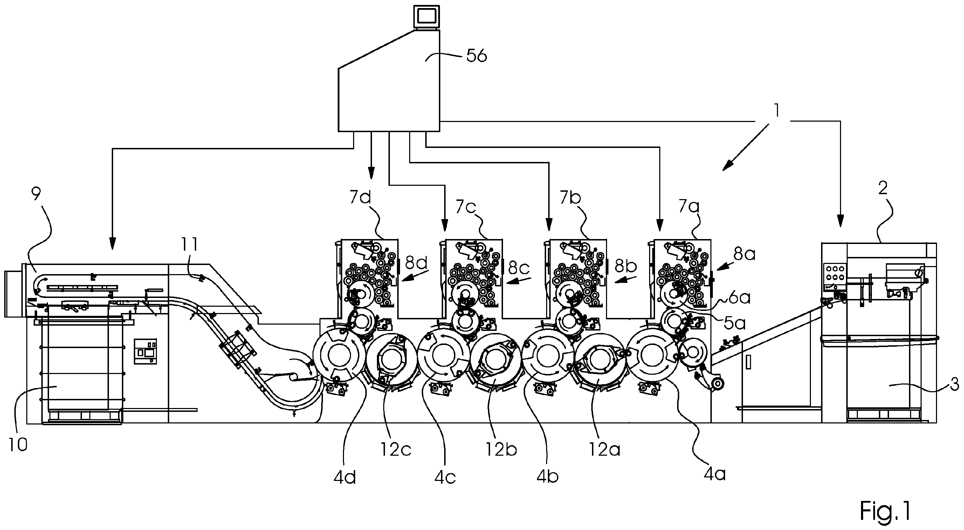

Diese Aufgabe wird erfindungsgemäß durch die im Patentanspruch 1 angegebenen Maßnahmen gelöst. Vorteilhafte Weiterbildungen der Erfindung sind in den Unteransprüchen genannt und werden nachstehend noch anhand der Figuren 1 bis 3 der beigefügten Zeichnungen erläutert.

Das erfindungsgemäße Verfahren sieht bereits vor oder nach Beendigung eines Druckdurchganges, jedenfalls aber bevor der Druckauftrag insgesamt abgearbeitet ist eine Abfrage vor, die dem Drucker die Möglichkeit gibt, den nächsten Druckdurchgang für den laufenden Druckauftrag einzugeben. Dies ist insbesondere dann sehr wichtig, wenn auf Maschinen mit wenigen Druckwerken gedruckt wird, also z. B. Vierfarbaufträge auf Zweifarbmaschinen, doppelseitiges Drucken auf Maschinen ohne Wendeeinrichtung etc. Der Drucker wird also bereits im ersten Druckdurchgang vom Rechner abgefragt, ob weitere Druckdurchgänge für das gleiche Druckprodukt auf der Maschine durchgeführt werden sollen. Dabei werden ihm verschiedene Alternativen angeboten aus denen er dann den nächsten auf der Maschine durchzuführenden Druckdurchgang auswählen kann. Stattdessen ist es aber auch möglich, dass der Rechner aus den Auftragsdaten den Typ des nachfolgenden Druckvorganges selbstständig ermittelt.

Ein Vorteil, der sich daraus ergibt, besteht darin, dass die bereits in der Maschinensteuerung abgelegten Daten und Einstellwerte zum Druckauftrag nicht ein weiteres Mal eingegeben bzw. abgefragt werden müssen. Ein weiterer Vorteil besteht darin, dass für den nächsten Druckdurchgang oft nur ein Teil der Einstellungen der Maschine geändert werden muss, so dass sich dafür die Rüstzeit stark verkürzt.

Die in einem weiteren Druckdurchgang auszuführenden Arbeiten werden vom Drucker als sogenannte "Druckarten" bezeichnet und sich nachstehend aufgeführt und mit Erläuterungen versehen:
1. Umschlagen in einer Form (work and turn):
   Bei dieser Druckart wird auf beiden Seiten des Druckbogens das gleiche Sujet gedruckt. Demzufolge muss beim Umschlagen der Stapel so gewendet werden, dass die Seitenkanten vertauscht sind. Entsprechend müssen nun aber die Bögen an der im Vergleich zum ersten Durchlauf gegenüberliegenden Seitenziehmarke auf dem Anlegetisch der Druckmaschine ausgerichtet werden und eben diese muss während des zweiten Druckdurchlaufs aktiviert und permanent von der Steuerung angesprochen werden.
2. Umschlagen in zwei Formen (work and back):
   Bei dieser Druckart wird auf beiden Seiten des Druckbogens ein unterschiedliches Sujet gedruckt. Auch hier wird beim Umschlagen der Stapel so gewendet, dass die Seitenkanten vertauscht sind und muss die Ausrichtung des Bogens an der gegenüber dem ersten Durchlauf gegenüberliegenden Seitenziehmarke erfolgen. Da allerdings das Sujet unterschiedlich ist, benötigt die Druckmaschine andere Farbvoreinstellwerte und die Druckplatten müssen gewechselt werden.
3. Umstülpen in einer Form (work and tumble):
   Bei dieser Druckart wird auf beiden Seiten des Druckbogens das gleiche Sujet gedruckt, aber beim Umschlagen wird der Stapel so gewendet, dass die Vorder- und die Hinterkante der Bögen gegenüber dem ersten Durchlauf vertauscht sind. Hier ist es nicht erforderlich den Bogenlauf zu verändern d. h. die Seitenziehmarken zu wechseln.
4. Umstülpen in zwei Formen (perfecting on a straight press):
   Bei dieser Druckart wird auf beiden Seiten des Druckbogens mit unterschiedlichem Sujet gedruckt und der Stapel wird so gewendet, dass Vorder- und Hinterkante vertauscht sind. Hier sind wieder ein Plattenwechsel und eine neue Farbvoreinstellung erforderlich, auch das Umfangs- und Seitenregister muss neu einstellt werden, die Seitenziehmarken werden jedoch beibehalten.
5. Druck in mehreren Druckdurchgängen:
   Hier wird Druckauftrag an einer Maschine abgearbeitet, die weniger Druckwerke zur Verfügung hat, als es der Druckauftrag verlangt, beispielsweise ein Achtfarbdruckauftrag auf einer Vierfarbmaschine oder ein Vierfarbdruckauftrag auf einer Zweifarbenmaschine. Entsprechend sind die Arbeiten bezüglich des Plattenwechsels und der Farbvoreinstellung erforderlich, da die Farbwerke jedoch mit anderen Farben befüllt werden, sind sie zwischen den beiden Druckdurchgängen komplett zu entleeren, zu reinigen und neu zu befüllen. Hingegen ändern sich die Einstellungen des Papierlaufs nicht.
6. Schriftwechsel / Sprachwechsel:
   Bei dieser Druckart bleiben die Druckplatten, die keine Schrift beinhalten, in den entsprechenden Druckwerken, die Druckplatten hingegen, welche Text beinhalten, beispielsweise die in dem Druckwerk, das mit der Farbe Schwarz druckt, werden gegen Druckplatten mit einem anderen Sujet gewechselt. Am Papierlauf und den Farbeinstellungen ändert sich in der Regel nichts.

Zweckmäßigerweise werden also die oben genannten Möglichkeiten für den zweiten Druckdurchlauf dem Bediener vom Rechner der Druckmaschine zur Auswahl angeboten, nachdem er z. B. in einem Abfragefenster auf dem Bildschirm bestätigt hat, dass ein weiterer Druckdurchlauf erforderlich ist. Entsprechend der Art des dann ausgewählten zweiten Druckdurchlaufs werden dann vom Rechner über die Steuerung der Maschine bestimmte für diese Art des Durchlaufs erforderliche Einstellungen an der Maschine direkt vorgenommen, wie beispielsweise das Wechseln der Seitenziehmarken, das Einleiten eines Plattenwechselvorgangs etc., während andere Arbeitsschritte zur Einstellung der Maschine eventuell weitere Eingaben durch die Bedienperson d. h. den Drucker erfordern. So kann diese beim Drucken im zweiten Durchgang mit geändertem Sujet beispielsweise angeben, welche Farbzonenvoreinstellwerte verwendet werden sollen bzw. von welchem früheren Auftrag diese Werte übernommen werden sollen.

In einer anderen Ausführungsform der Erfindung kann das Verfahren auch so ausgebildet sein, dass die Steuerungseinrichtung auf die Daten des vorliegenden Druckauftrags zurückgreift und daraus die Art des nächsten Druckauftrags ermittelt sowie weitere Daten, welche für das Einrichten und Abarbeiten des Druckauftrags im jeweiligen nächsten Durchlauf notwendig sind, selbsttätig aus den vorliegenden Auftragsdaten berechnet. Zur Berechnung der Einstellwerte der Maschine können weiterhin Daten von ähnlichen Druckaufträgen bzw. den entsprechen Druckdurchläufen aus der Vergangenheit herangezogen werden bzw. die in der Maschinenhistorie gespeicherten Einstellwerte.

Das erfindungsgemäße Verfahren ist im Steuerrechner der Druckmaschine vorzugsweise als Software oder als Firmware realisiert oder auch auf einem separaten Personal Computer oder Server, der mit der Maschine kommunizieren kann.

Es ist weiterhin vorteilhaft, wenn die an den Bediener gerichteten Abfragen per Bildschirmausgabe oder Sprachausgabe erfolgen. Ersteres hat den Vorteil, dass Entscheidungshilfen in visualisierter Form dargeboten werden können, z. B. mehrere Alternativen als Buttons, mögliche Kennlinien als Graphik oder der Einstellvorgang selbst skizzenhaft an einem Abbild der Druckmaschine. Die Sprachausgabe hingegen ist dann von Vorteil, wenn es sich bei der Abfrage um eine einfach Entscheidung handelt, die mit ja oder nein beantwortet werden kann. Selbstverständlich können auch Sprachausgabe und visuelle Darstellung miteinander kombiniert werden, und die Eingaben der Bedienperson können ebenfalls sowohl per Sprache als auch z. B. zweckmäßig über einen berührungsempfindlichen Bildschirm (Touchscreen) erfolgen. Die Konversation des Bedieners mit der Sprachsteuerung erfolgt aufgrund der lauten Umgebung von Druckmaschinen bevorzugt über Kopfhörer, die im Idealfall drahtlos mit dem Steuerrechner verbunden sind. So kann die Bedienperson einfache Abfragen auch beantworten, wenn der Bildschirm nicht in Reichweite ist.

Es ist außerdem zweckmäßig vorzusehen, dass der Steuerrechner die beim Ausführen des Druckdurchgangs bzw. der Arbeitsschritte im Zuge des Rüstens für den nächsten Druckdurchlauf verwendeten Einstellungen der Maschine abspeichert. Auf diese Weise ist es möglich, diese Einstellungen und die Abfolge der Arbeitsschritte bei Wiederholaufträgen wieder zu verwenden. Hierbei können die Druckdurchläufe unterschiedlichen Typs bzw. unterschiedlicher Druckarten des jeweiligen Auftrages entweder separat oder als Module unter dem jeweiligen Auftrag gespeichert werden und bei Folgeaufträgen einzeln oder als Set aufgerufen werden.

Es ist des Weiteren vorteilhaft, Wenn der Steuerrechner die bei der Umrüstung der Maschine für den nächsten Durchlauf erforderlichen manuellen Eingriffe durch den Bediener an diesen übermittelt und mit den weiteren automatisch durchzuführen Arbeitsschritten erst dann fortfährt, wenn die manuellen Arbeitsschritte bzw. deren Erledigung z. B. über Sensoren von dem Steuerrechner erkannt wird oder vom Bediener selbst über ein Quittierungssignal bestätigt worden ist. Denn bei Umrüstaktionen zwischen den verschiedenen Druckdurchläufen lässt es sich meist nicht vermeiden, dass die Bedienperson selbst Hand anlegen muss, z. B. wenn kein automatischer Plattenwechsler an den Druckwerken der Druckmaschine vorhanden ist, müssen die Druckplatten manuell gewechselt werden. In diesem Fall fordert der Steuerrechner zum jeweiligen Zeitpunkt den Bediener auf, die Druckplatte in einem bestimmten Druckwerk der Druckmaschine vom Plattenzylinder zu entfernen und eine neue Druckplatte einzufügen.

Nachfolgend wird die Erfindung in einem Ausführungsbeispiel anhand der Figuren 1 bis 3 der beigefügten Zeichnungen erläutert:
Figur 1 ist die Prinzipskizze einer Vierfarbenoffsetdruckmaschine ohne Wendung, die zur Durchführung des erfindungsgemäßen Verfahrens prädestiniert ist.
Figur 2 zeigt ein Flussdiagramm mit den verschiedenen Programmschritten für das erfindungsgemäße Verfahren.
Figur 3 stellt eine sogenannte Auftragswechselliste oder Druckdurchlaufwechselliste in vereinfachter Form mit den zwischen zwei Druckdurchläufen erforderlichen Arbeitsschritten dar.

Figur 1 zeigt eine Offsetdruckmaschine 1 in Reihenbauweise mit einem Anleger 2, in dem sich der unbedruckte Papierstapel 3 befindet, sowie vier Druckwerken 7a - d für die vier Grundfarben Schwarz, Gelb, Magenta und Cyan. Zwischen den Druckwerken werden die zu bedruckenden Bögen von Transfertertrommeln 12 a - c zu den jeweiligen Gegendruckzylindern 4b - d der Druckwerke befördert. Auf das vierte Druckwerk 7d folgt der Ausleger 9 der Druckmaschine. Darin laufen Greiferbrücken 11 mittels einer Kettenführung um. Diese Greiferbrücken 11 übernehmen den bedruckten Bogen und führen ihn dem Bogenstapel 10 zu, wo er abgelegt wird.

Jedes der vier Druckwerke 7a - d besitzt einen Gegendruckzylinder 4a, einen Gummituchzylinder 5a sowie einen Druckformzylinder 6a, auf den die jeweilige Druckplatte aufgespannt ist. Eingefärbt werden die Druckplatten durch Farbwerke 8a - d.

Die Funktionen in den Druckwerken 7a - d, dem Anleger 2 und dem Ausleger 9 werden von einer Maschinensteuerung 56 aus bedient, gesteuert und überwacht.

Für die nachfolgenden beispielhaften Erläuterungen sei angenommen, dass der letzte Auftrag, der auf der Druckmaschine 1 gedruckt wurde, gerade zu Ende geht. Der Drucker hat jetzt die Möglichkeit das Maschinenprogramm für den laufenden Auftrag auf zwei Wegen zu verlassen. Die eine Möglichkeit besteht darin, durch Betätigen des angebotenen Menüpunktes "Produktion beenden" zu wählen. Dadurch wird das gleichnamige Unterprogramm aufgerufen und die Steuerung fährt nach Durchlauf des letzten Bogens aus dem Stapel 3 die Maschine herunter und versetzt sie in den Ruhestand. Hierbei werden automatisch vom Rechner gesteuert 1. der Auftrag abgespeichert, 2. die Farbversorgung unterbrochen, 3. das Farbprofil und die Farbschichtdicke abgebaut, sodann 4. die Waschvorgänge für das Gummituch und den Druckzylinder eingeleitet, schließlich 5. die Druckplatte und das Farbwerk gewaschen. Danach wird die Maschine ausgeschaltet.

Die andere Möglichkeit besteht darin, den Auftrag "freizugeben". Wählt er diese Möglichkeit durch Drücken des entsprechenden Menübuttons, kann er die Auftragsnummer des nächsten Auftrags eingeben, dessen Auftragsdaten dann in den Speicher der Maschinensteuerung 56 geladen werden. Nehmen wir an, als nächstes soll auf der in Figur 1 dargestellten Vier-Farben-Bogenmaschine ein sogenannter Acht-Farben-Auftrag gedruckt werden, d. h. der Druckauftrag besteht darin, die durch die Maschine hindurch laufenden Bögen im ersten Durchlauf auf der Vorderseite zu bedrucken und auf dem Stapel 10 im Ausleger abzulegen und sie daraufhin nochmals an die Stelle des Stapels 3 im Anleger 2 zu bringen und den zweiten Druckdurchlauf zu starten. Aufgrund der im Vergleich zum vorherigen Auftrag unterschiedlichen Auftragsnummer springt das Programm in das Unterprogamm "Standardauftragswechsel", aus dem der Drucker wie auch bisher üblich für den nun folgenden Auftrag die Daten aus früheren Aufträgen z. B. für einen Folgeauftrag übernehmen kann. Mit entweder den übernommenen Daten aus einem früheren Auftrag, neuen Daten und Einstellungen soweit sie für den Auftrag bereits mitgeliefert wurden und in den Auftragsdaten vorhanden sind, oder Einstellungen, die der Drucker aufgrund seiner Erfahrung und seinen Kenntnissen beisteuert, wird die Druckmaschine 1 für den ersten Durchlauf eingerichtet und bedruckt danach die Bögen auf der Vorderseite.

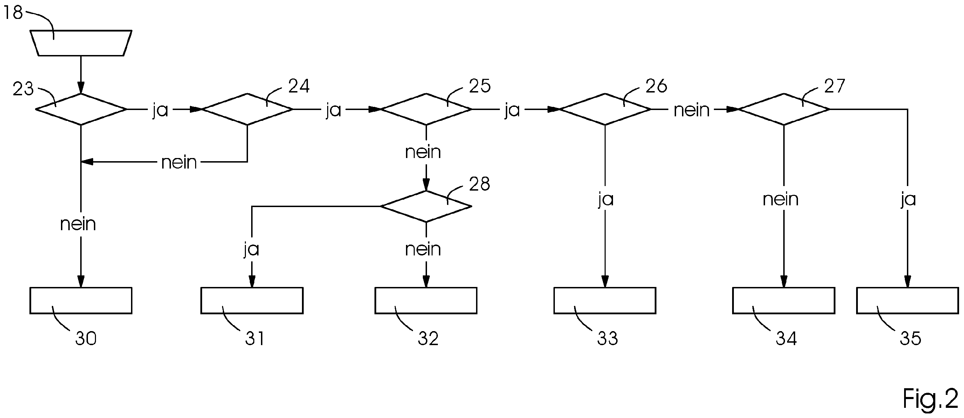

Der Rechner der Maschinensteuerung 56 der Druckmaschine ist nun so programmiert, dass er den Drucker, der die Maschine 1 bedient, beim Umrüsten der Maschine für den zweiten Druckdurchlauf mit einem entsprechenden Programm unterstützt. Dieser Programmablauf ist in Figur 2 dargestellt: Der Drucker verlässt das Programm des gerade zu Ende gehenden ersten Druckdurchlaufs über die Freigabetaste und erhält das Menü für den Auftragswechsel angeboten, wo er die Auftragsnummer des nächsten Auftrags eingeben kann (Box 18: Programmstart). In diesem angenommenen Falle ändert sich die Auftragsnummer jedoch nicht, da der zweite Druckdurchlauf zum gleichen Auftrag gehört. Deshalb wird an der Stelle die aktuelle Auftragsnummer bestätigt. Der Rechner der Maschinensteuerung 56 vergleicht jetzt die bestätigte bzw. neu eingegebene Auftragsnummer mit der des gerade abgearbeiteten Auftrags (Raute 23).

Da nun jedoch die Auftragsnummern identisch sind, beginnt der Steuerrechner damit, den Auftrag daraufhin zu analysieren, ob weitere Druckdurchgänge derselben gerade bedruckten Bögen sinnvoll sind. In einem ersten Plausibilitätscheck (Raute 24) werden die Auftragsdaten noch einmal daraufhin abgefragt, ob für den nun folgenden Druckdurchlauf die Länge, Breite und Dicke des Bedruckstoffes d. h. der Bögen mit denen des letzten Drucklaufs übereinstimmt. Wenn das nicht der Fall ist, springt die Steuerung wieder in das vorstehend beschriebene Unterprogramm "Standartauftragswechsel". Im anderen Falle, wenn der Plausibilitätscheck Identität ergibt, wird abgefragt, ob die Auftragsdaten für den zweiten Durchlauf eine identische Ziehseite wie für den ersten Durchlauf ausweisen (Raute 25). Ist das nicht der Fall, dann handelt es sich beim zweiten Durchlauf um die Druckart "Umschlagen" und es wird aus den Auftragsdaten abgefragt, ob die Farbzuordnung identisch und in gleicher Seite zugeordnet ist wie im ersten Durchlauf. Ergibt der Vergleich (Raute 28), dass dies der Fall ist, wechselt die Maschinensteuerung in das Unterprogramm "Umschlagen in einer Form" (31), im anderen Falle in das Unterprogramm "Umschlagen in zwei Formen" (32).

Im anderen Falle, wenn die Ziehseiten identisch sind, schließt sich auch hier wieder die Abfrage daraufhin an, ob die Farbzuordnung des vorhergehenden Durchlaufs mit dem folgenden Durchlauf identisch ist und der gleichen Seite zugeordnet ist (Raute 26). Wenn das der Fall ist und somit die Abfrage mit Ja beantwortet wird, wechselt die Steuerung in das Unterprogramm Druckart "Umstülpen in einer Form" (Box 33). Ist dies hingegen nicht der Fall, wird abgefragt, ob wenigstens die Farben der gleichen Druckseite zugeordnet sind (Raute 27). Ist auch dies nicht der Fall, wechselt die Steuerung in die Druckart "Umstülpen in zwei Formen". Wird hingegen die Abfrage in der Entscheidungsraute 27 mit Ja beantwortet, wechselt die Steuerung in das Unterprogramm "Druck in mehreren Druckdurchgängen" (Box 35).

Auf diese Weise ermittelt die Software des Rechners der Maschinensteuerung 56 selbsttätig aus den Auftragsdaten die Druckart für den zweiten Druckdurchlauf und kann danach die Arbeitsschritte und Einstellungen vornehmen, die für eine solche Druckart beim Umrüsten der Maschine erforderlich sind.

In einem anderen hier nur angedeuteten Ausführungsbeispiel kann auf eine solche automatische Analyse der Auftragsdaten verzichtet werden und stattdessen dem Drucker nach dem Vergleich der Auftragsnummern auf dem Bildschirmmenü z. B. fünf Buttons zum Bestätigen angeboten werden, die den in der Figur 2 dargestellten fünf Druckarten 31 bis 35 entsprechen. Auf diese Weise kann nun der Drucker aus seiner Erfahrung bzw. der Kenntnis des laufenden Auftrags den Typus des zweiten Durchlaufs d. h. die Druckart wählen, die im zweiten Durchlauf durchgeführt werden soll.

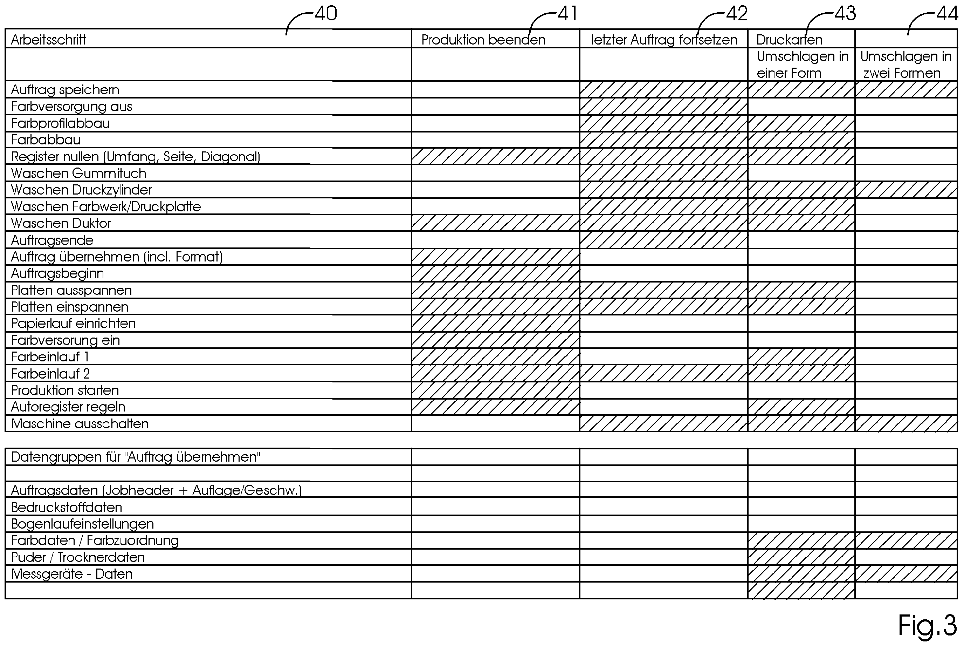

Das Auswählen der Druckart hat zur Folge, dass die Auftragswechselliste bzw. Druckdurchlaufwechselliste, in die Form gebracht wird, die der folgenden Druckart entspricht. Das wird nunmehr anhand der Figur 3 erläutert. In diesem Diagramm sind in der linken Spalte die wesentlichen, für das Umrüsten der Maschine 1 bei einem Auftragswechsel erforderlichen Arbeitsschritte und zu übernehmenden Datengruppen aufgelistet (Spalte 40). In der nächsten Spalte 41 sind die für das Unterprogramm "Produktion beenden" erforderlichen Arbeitsschritte schraffiert. Geht man die durch, dann ergibt sich der Ablauf: Auftrag speichern - Farbversorgung unterbrechen - Farbprofil abbauen - Farbe insgesamt abbauen - Gummituch waschen - Druckzylinder waschen - Farbwerk waschen - Druckplatte waschen - Programm in den Zustand "Auftragsende versetzen" - Maschine ausschalten.

Im Unterprogramm "letzter Auftrag fortsetzen" nach Spalte 42 ist ein solches Herunterfahren und Reinigen nicht erforderlich. Vielmehr startet die Maschine dort sofort wieder, indem sie den Auftrag übernimmt und in den Auftragsbeginn wechselt, woraufhin dann sofort der Papierlauf eingerichtet wird, die Farbversorgung eingeschaltet wird, der Farbeinlauf gestartet wird und mit der Produktion begonnen wird, wobei dann während der Produktion die automatische Registerregelung eingeschaltet wird. Des Weiteren werden alle Daten betreffend Auftrag, Bedruckstoff, Bogenlauf, Farbe, Puder, Messgeräte etc. vom Vorauftrag übernommen.

In den Spalten 43 und 44 sind jetzt exemplarisch die erforderlichen Arbeitsschritte für einen zweiten Durchlauf in den Druckarten "Umschlagen in einer Form" und "Umschlagen in zwei Formen" dargestellt und zwar wieder schraffiert die und nur die, die in der Auftragsliste erscheinen:
Bei der Druckart "Umschlagen in einer Form" sind nur wenige Umrüstvorgänge erforderlich. Die Farbversorgung wird ausgeschaltet, die Übernahme des Bogenformats wird vorgezogen und das Gummituch wird gewaschen. Anschließend wird nach der Übernahme der Daten für den zweiten Durchlauf der Papierlauf eingerichtet und die Farbversorgung wieder eingeschaltet. Ein nochmaliger Farbeinlauf ist nicht erforderlich, da das Farbprofil im Farbwerk ja beibehalten wird.

In der Druckart "Umschlagen in zwei Formen" (Spalte 44) befinden sich hingegen bedeutend mehr Arbeitsschritte in der Druckdurchlaufswechselliste. Es sind dies die Schritte Farbversorgung aus - Farbprofil abbauen - Farbmenge abbauen - Stapelformat übernehmen - Umfangsregister nullen - Seitenregister nullen - Diagonalregister nullen - Gummituch waschen - Farbwerk waschen - Platte waschen - Duktor waschen, bis der Programmpunkt Auftragsende erreicht ist und der neue Auftrag übernommen wird. Sodann werden die Platten ausgespannt, neue Platten eingespannt, die Transferter umgestellt, der Papierlauf eingerichtet, die Farbversorgung wieder eingeschaltet, und es wird ein neuer Farbeinlauf vorgenommen, bevor die Produktion gestartet wird, innerhalb der dann noch das Autoregister zu regeln ist. All diese Vorgänge erscheinen in der zugehörigen Druckdurchlaufsliste und werden teils von der Steuerung der Maschine selbsttätig, teils wie das Platten ausspannen und wiedereinspannen oder das Befüllen der Farbkästen mit Farbe soweit keine automatische Farbversorgung an der Maschine installiert ist, durch den Drucker vorgenommen.

Die Druckarten "Umstülpen in zwei Formen" und "Umstülpen in einer Form" unterscheiden sich von den beiden Druckarten "Umschlagen in zwei Formen" und "Umschlagen in einer Form" im Bezug auf die Arbeitsschritte für das Umrüsten nur wenig. So muss beim "Umstülpen in zwei Formen" im Vergleich zum "Umschlagen" der Papierlauf nicht neu eingerichtet werden, da die Bögen zur gleichen Seite gezogen werden. Da ein Großteil der Arbeitsschritte beim Umrüsten nach der Erkennung der Druckart für den zweiten Durchlauf automatisch von der Steuerung der Maschine vorgenommen wird und die Maschine auch für den zweiten Durchlauf soweit es geht in dem ursprünglichen Zustand belassen wird und nur die für den zweiten Durchgang unbedingt erforderlichen Arbeitsschritte und Änderungen vorgenommen werden müssen, verkürzen sich die Rüstzeiten innerhalb eines Auftrags mit mehreren Durchläufen deshalb erheblich gegenüber den bisherigen Lösungen, bei denen der Drucker z. B. nach erst einmal heruntergefahrener Maschine (Spalte 41, "Produktion beenden") mit dem Einrichten wieder bei null startet.

### Bezugszeichenliste

- 1: Druckmaschine
- 2: Anleger
- 3: Anlegerstapel
- 4a - d: Gegendruckzylinder
- 5a: Gummituchzylinder
- 6a: Plattenzylinder
- 7a - d: Druckwerke
- 8a - d: Farbwerke
- 9: Ausleger
- 10: Auslegerstapel
- 11: Greiferbrücken
- 12 a-c: Transfertertrommeln
- 18: Programmstart
- 23: Programmverzweigung "Auftragsnummer identisch mit letztem Auftrag?"
- 24: Programmverzweigung "Abmessungen Bedruckstoff (Länge, Breite, Dicke) identisch?"
- 25: Programmverzweigung "Ziehseite identisch?"
- 26: Programmverzweigung "Farbzuordnung identisch und gleicher Seite zugeordnet?"
- 27: Programmverzweigung "Farben der gleichen Druckseite zugeordnet?"
- 28: Programmverzweigung "Farbzuordnung identisch und gleicher Seite zugeordnet?"

- 30: Unterprogramm "Standard Auftragswechsel"
- 31: Unterprogramm "Umschlagen in einer Form"
- 32: Unterprogramm "Umschlagen in zwei Formen"
- 33: Unterprogramm "Umstülpen in einer Form"
- 34: Unterprogramm "Umstülpen in zwei Formen"
- 35: Unterprogramm "Druck in mehreren Druckgängen"
- 40 - 44: Spalten / Auftragswechselliste
- 56: Maschinensteuerung / Rechner

## Patentansprüche

1. Verfahren zum Betrieben einer Bogendruckmaschine (1) mit einem Rechner (56) und einer Speichereinrichtung, in der verschiedene Druckaufträge und/oder die zugehörigen Einstellwerte und/oder Arbeitsschritte für das Einrichten der Druckmaschine (1) bei einem Auftragswechsel speicherbar sind, wobei der Rechner (56) bereits vor Beendigung eines Druckauftrags oder direkt danach eine Abfrage (23) nach den Auftragsdaten eines Druckauftrags und/oder Eingaben des Bedieners generiert und anhand dieser Eingaben Einstellungen oder Arbeitsschritte der Druckmaschine (1) für einen Druckauftrag vornimmt oder vorschlägt,
**dadurch gekennzeichnet,**
**dass** sich aus den Eingaben ergibt, ob und gegebenenfalls welche weiteren Druckdurchgänge innerhalb des gleichen Druckauftrags erforderlich sind und entsprechend den dort gemachten Angaben nur die Einstellungen an der Druckmaschine (1) vornimmt und/oder die Arbeitsschritte einleitet oder vorschlägt, die für den nachfolgenden Durchlauf der bereits bedruckten Bögen erforderlich sind.

2. Verfahren nach Anspruch 1,
wobei der Rechner (56) die möglichen Arten von weiteren Druckdurchläufen zur Auswahl anbietet und nach Eingabe der Art des nächsten Druckdurchlaufs eine geänderte Auftragswechselliste (41-44) generiert, in der nur die Einstellungen und Arbeitsschritte enthalten sind, die für den nächsten Druckdurchlauf erforderlich sind.

3. Verfahren nach Anspruch 1,
wobei der Rechner (56) aus den Auftragsdaten die Art des nächsten Druckdurchlauf selbsttätig ermittelt (24-28) und daraus eine geänderte Auftragswechselliste (41-44) generiert, in der nur die Einstellungen und Arbeitsschritte enthalten sind, die für den nächsten Druckdurchlauf erforderlich sind.

4. Verfahren nach Anspruch 2 oder 3,
wobei der Rechner (56) die Druckmaschine (1) selbsttätig entsprechend der generierten neuen Auftragswechselliste (41-44) einstellt.

5. Verfahren nach Anspruch 2,
wobei der Rechner (56) die generierte neue Auftragswechselliste (41-44) der Bedienperson anzeigt derart, dass diese Änderungen inhaltlicher Art oder in der Reihenfolge der Arbeitsschritte eingeben kann.

6. Verfahren nach Anspruch 1,
wobei die weiteren Druckdurchgänge eine oder mehrere der folgenden Typen bzw. Druckarten umfassen:
- Umschlagen in einer Form
- Umschlagen in zwei Formen
- Umstülpen in einer Form
- Umstülpen in zwei Formen
- Druck in mehreren Durchgängen
- Schriftwechsel oder Sprachwechsel.

7. Verfahren nach Anspruch 6,
wobei die Druckdurchläufe unterschiedlichen Typs bzw. Druckarten des jeweiligen Auftrags entweder separat oder als Module unter dem jeweiligen Auftrag gespeichert werden und bei Folgeaufträgen einzeln oder als Set aufrufbar sind.

8. Verfahren nach Anspruch 1,
**dadurch gekennzeichnet,**
**dass** die vom Rechner (56) generierten Abfragen (23) visuell oder als Sprachausgabe erfolgen und die Eingaben der Bedienperson über die Tastatur, einen berührungsempfindlichen Bildschirm (Touchscreen) oder ebenfalls sprachgesteuert erfolgen.

9. Verfahren nach Anspruch 1,
**dadurch gekennzeichnet,**
**dass** der Rechner (56) das Durchführen von manuellen Arbeitsschritten der Bedienperson signalisiert und mit den weiteren Einstellungen und Arbeitsschritten erst dann fortführt, wenn der manuelle Arbeitsschritt durchgeführt wurde.

## Claims

1. Method for operating a sheet-fed printing press (1) including a computer (56) and a memory device for saving various print jobs and/or the associated settings and/or process steps for setting up the printing press (1) for a job change, wherein the computer (56) generates a query (23) for the job data of a print job and/or for an operator's inputs even before a print job is completed or immediately after a print job is completed and, based on these inputs, makes or suggests settings or process steps of the printing press (1) for a print job,
**characterized in**
**that** the inputs yield information on whether further passes are required within the same print job and, if so, which further passes are required, and that in accordance with the information provided therein, only those settings are made on the printing press (1) and/or only those process steps are initiated or suggested that are required for the subsequent pass of the sheets that have already been printed.

2. Method according to claim 1,
wherein the computer (56) offers the possible types of further passes for selection and, after the type of the next pass has been input, generates a modified job change list (41-44) that only includes the settings and process steps required for the next pass.

3. Method according to claim 1,
wherein the computer (56) automatically determines (24-28) the type of the next pass from the job data and, based thereon, generates a modified job change list (41-44) that only includes the settings and process steps required for the next pass.

4. Method according to claim 2 or 3,
wherein the computer (56) automatically adjusts the printing press (1) in accordance with the generated new job change list (41-44).

5. Method according to claim 2,
wherein the computer (56) displays the generated new job change list (41-44) to the operator in such a way that the operator may input changes to the content or the order of the process steps.

6. Method according to claim 1,
wherein the further passes comprise one or more of the following types or printing modes:
- work and turn
- work and back
- work and tumble
- perfecting on a straight press
- printing in multiple passes
- font or language change

7. Method according to claim 6,
wherein the different types of passes or the different printing modes of the respective job are either saved separately or as modules under the respective job to be retrievable individually or as a set for follow-up orders.

8. Method according to claim 1,
**characterized in**
**that** the queries (23) generated by the computer (56) are made visually or as voice outputs and the operator's inputs are made using a keyboard or a touch screen, or likewise as voice-controlled inputs.

9. Method according to claim 1,
**characterized in**
**that** the computer (56) indicates the implementation of manual steps to the operator and does not move on to the further settings and process steps until the manual process step has been completed.

## Revendications

1. Procédé pour l'exploitation d'une machine d'impression en feuilles (1) avec un calculateur (56) et un dispositif de mémorisation, dans lequel différents travaux d'impression et/ou les valeurs de réglage et/ou étapes de travail correspondantes nécessaires à la préparation de la machine d'impression peuvent être enregistrés dans le cas d'un changement de travail, pour lequel le calculateur (56) génère, déjà avant la fin d'un travail d'impression ou directement après, une requête (23) des données de commande d'un travail d'impression et/ou entrées de l'opérateur et, à l'aide de ces entrées, effectue ou propose des réglages ou étapes de travail de la machine d'impression (1) pour un travail d'impression,
**caractérisé par le fait**
**que** les entrées déterminent si des passages d'impression, et le cas échéant lesquels, sont nécessaires dans le cadre du même travail d'impression et, en fonction des indications qui y figurent, procède uniquement aux réglages sur la machine d'impression (1) et/ou entreprend ou propose les étapes de travail nécessaires pour le passage consécutif des feuilles déjà imprimées.

2. Procédé selon la revendication 1,
pour lequel le calculateur (56) propose pour sélection les types possibles de passages d'impression et génère, en fonction du type du passage d'impression, une liste de changement de travail (41-44) modifiée, qui renferme uniquement les réglages et étapes de travail nécessaires pour le prochain passage d'impression.

3. Procédé selon la revendication 1,
pour lequel le calculateur (56) détermine automatiquement le type du prochain passage d'impression (24-28) et génère sur cette base une liste de changement de travail modifiée (41-44), renfermant seulement les réglages et étapes de travail nécessaires pour le prochain passage d'impression.

4. Procédé selon la revendication 2 ou 3,
pour lequel le calculateur (56) règle automatiquement la machine d'impression (1) en fonction de la nouvelle liste de changement de travail générée (41-44) .

5. Procédé selon la revendication 2,
pour lequel le calculateur (56) affiche la nouvelle liste de changement de travail générée (41-44) à l'adresse de l'opérateur, de sorte que ce dernier puisse prendre en charge ces modifications portant sur le contenu ou la séquence des étapes de travail.

6. Procédé selon la revendication 1,
pour lequel les passages d'impression consécutifs peuvent comprendre l'un ou plusieurs des types d'impression suivants :
- Basculage dans une forme
- Basculage dans deux formes
- Culbutage dans une forme
- Culbutage dans deux formes
- Impression en plusieurs passages
- Changement de police ou changement de langue

7. Procédé selon la revendication 6,
pour lequel les passages d'impression de type ou de mode d'impression différents du travail considéré sont enregistrés séparément ou comme modules sous le travail considéré et peuvent être appelés individuellement ou sous forme de set lors de travaux consécutifs.

8. Procédé selon la revendication 1,
**caractérisé par le fait**
**que** les requêtes (23) générées par le calculateur (56) sont délivrées visuellement ou sous forme vocale et que les entrées de l'opérateur s'effectuent via le clavier, un clavier à effleurement (clavier tactile) ou bien encore par commande vocale.

9. Procédé selon la revendication 1,
**caractérisé par le fait**
**que** le calculateur (56) signale l'exécution d'étapes de travail manuelles à l'opérateur et ne poursuit avec les réglages et étapes de travail suivants qu'une fois l'étape de travail manuelle exécutée.
